# EUROPEAN PATENT SPECIFICATION

(11) **EP 2 208 750 B1**
(45) Date of publication and mention of the grant of the patent: **24.08.2011**
(21) Application number: 10004774.5
(22) Date of filing: 05.11.2001
(51) Int. Cl.: C08J 9/00, C08J 9/14, C08J 9/18, C08J 9/12, H01B 7/00, H01B 3/30, H01B 3/44, H01B 13/14

(54) **Transmission line comprising a foamed polymer alloy**
Übertragungsleitung enthaltend einen dielektrischen microzellularen Schaum
Ligne de transmission comprenant un dielectrique alveolaire microcellulaire

(43) Date of publication of application: 21.07.2010
(62) Divisional of application: 01988133.3
(73) Proprietor: Alcatel Lucent, 75007 Paris (FR)
(72) Inventor: Bufanda, Daniel, Meriden, CT 06450 (US); Audenaerde, Karl, Falmouth, MA 02540-2526 (US)
(74) Representative: Schmidt, Werner Karl

(56) References cited:
- EP-A- 0 540 322
- US-A- 6 037 545
- US-A- 6 051 174

## Description

### FIELD OF THE INVENTION

The present invention relates to a microcellular foam polymer dielectric for use in transmission lines, for example, a coaxial RF cable or (micro-) stripline, or any other type of transmission line which uses a dielectric.

### BACKGROUND OF THE INVENTION

Conventional coaxial cable comprises a core containing an inner conductor and a dielectric, and a conductive sheath surrounding the core, wherein the sheath serves as an outer conductor. The dielectric is positioned between die inner conductor and outer conductor.

Other transmission lines belong to the class of striplines and its derivatives such as the coplanar line and the microstripline. This class is characterized by a single conductor and one or more ground planes or grounded lines in a planar configuration. The signal travels through the dielectric space defined by these different lines and planes. The dielectric may be homogeneous or consist of different materials, including air.

Various polymeric materials have been used as the primary dielectric material in transmission lines.

One common type of dielectric is polyolefin foam. However, this dielectric is disadvantageous in that dissipation in the dielectric results in signal attenuation. The dielectric losses are a function of the dissipation factor of the polymer, the density of the foam, and the frequency of the signal.

Recently, improvements have been made in polymer foam technology allowing for improved properties of foam which may be used as a dielectric in transmission lines. For example, the MuCell® process of Trexel, Inc. achieves a uniform cell structure having a very small cell size, not more than 100 µm, and frequently not more than 60 µm. The MuCell® process for making microcellular foam is disclosed in U.S. Patent Na. 5,866,053 ("Park"), herein incorporated by reference. In this process, an extrusion system is used to provide the foamed material. The extrusion system involves a supplying plastic pellets which are melted, and also a blowing agent. Specifically, Park uses a supercritical fluid, such as carbon dioxide in the supercritical state, as the blowing agent, to foam a single polymer. In the extruder, the supercritical fluid (carbon dioxide) is dissolved into the molten plastic. The resulting material is then foamed in an expansion stage where a thermodynamic instability is caused by a rapid pressure drop.

In more detail, Park describes an extrusion system for providing a foamed plastic polymer, where a polymer is supplied to an extruder for movement through a rotating screw member. The material is placed in a molten state, and a blowing agent, such as a supercritical fluid, is introduced into the extruder at a selected pressure so that a two-phase mixture of the molten material and the blowing agent is foamed. The blowing agent is then diffused into and dissolved in the molten material to form a single-phase solution, which is forwarded from a solution formation area to a nucleation device. Thermodynamic instability is induced through a rapid pressure drop. In a preferred embodiment, a pressure drop greater than 0.9 GPa/s occurs in the nucleation device to nucleate microcells in the solution. A further shaping device, e.g., a die, can be used to produce a foamed material of a desired shape. For further information regarding this process, see <http://www.trexel.com/deseript.html>.

By using a polymer alloy which demonstrates high melt strength, superior electric dissipation properties, a glass transition temperature greater than 1000°C, and a melt index of between 0.6 and 9, the low-density foamed dielectric of the present invention is both thermally stable over an extended temperature range and results in extremely low Signal attenuation.

U.S. Pat. No. 6,937,545 ("Fox'), herein incorporated by reference, describes a coaxial cable with a foam dielectric. The polymer alloy of the polymer foam is described as a blend of high- and low-density polyethylene. Further, a blowing agent is used in combination with an exothennic nucleating agent, such as azodicarbonamide and an endothennic nucleating agent, such as sodium carbonate/citric acid. The foams described in Fox have densities of between 0.22 g/cm³ and 0.17 g/cm³. However, the foam dielectric of Fox is disadvantageous because foam densities below 0.17 g/cm³ may suffer structural instability and cannot be readily achieved.

The present invention, which uses combination of a polymer alloy and a supercritical fluid foaming agent, by comparison, can achieve a density as low as about 0.02 g/cm³. In a preferred embodiment of the present invention, the foamed dielectric has a density of from about 0.02 g/cm³ to about 0.20 g/cm³. This translates into superior attenuation properties while preserving favorable structural properties.

### SUMMARY OF THE INVENTION

An object of the present invention is to provide a transmission line containing a foam dielectric, said dielectric comprising a foamed polymer alloy obtained by using a supercritical fluid as a foaming agent, wherein said polymer alloy comprises at least 2 different polymers or a graft polymer of said polymers; and wherein said polymer alloy has a glass transition temperature greater than 100°C and a melt index of between 0,6 and 9.

In an another embodiment, the invention provides a process for making a transmission line according to claim 17 and a process for making a coaxial transmission line according to claim 18.

### BRIEF DESCRIPTION OF THE DRAWINGS

Figure 1 is a cross-sectional view of a section of coaxial cable incorporating a foamed polymer alloy dielectric.
Figure 2 shows a stripline transmission line fabricated using a foam dielectric.
Figure 3 shows a supercritical fluid extrusion apparatus which is used in the example provided herein.
Figure 4 is a flowchart of the various processing steps incorporated into the present invention.
Figure 5 is a flowchart of the processing steps used to produce a stripline cable.
Figure 6 is a photomicrograph of foam dielectric magnified to a power of 100X.
Figure 7 is a photomicrograph of foam dielectric magnified to a power of 500X.
Figure 8 is a photomicrograph of prior art foamed polyethylene magnified to a power of 100X.
Figure 9 is a schematic of the die tooling applied to the extruder cross head used in the process of the present invention.

### DETAILED DESCRIPTION OF THE INVENTION

As discussed above, in one embodiment of the present invention, the above mentioned objects of the present invention have been met by using a foam dielectric comprising a foamed polymer alloy obtained from using a supercritical fluid.

The particular polymer alloy employed is not critical to the present invention. Examples of polymer alloys which can be employed in the present invention include combinations of amorphous resins and polyolefins, more particularly combinations of amorphous resins and semi-crystalline polyolefins.

The polymer alloy has a glass transition temperature outside the range greater than 100°C, and a melt index of between 0.6 and 9. More preferably, the polymer alloy is Hivalloy^{™}, from Basell, N.V. (Hoeksteen 66, 2132 MS, Hoofddorp, The Netherlands). Most polymer materials used to make foam dielectrics found in the prior art are unsuitable because they have a glass transition temperature within the range between about -40°C and about 100°C. When foamed, and subjected to a heat-aging test, these materials will undergo a phase transformation (at or around the glass transition temperature) that causes outgassing. The result is significant shrinkage and an unfavorable increase in density.

On the other hand, Hivalloy^{™} is thermally stable over the temperature range of -40°C and about 100°C. In a preferred embodiment it has a melt index between 0.6 and 9. In addition, melt indexes outside this range are achievable. A particular grade of Hivalloy^{™}, Hivalloy G2120, was tested to standard ASTMD 1238 and had a melt index of 5.

The Hivalloy^{™} G2120 used in one embodiment of the present invention comprises:
(1) about 20 to about 80 weight % polypropylene-grafted-polystyrene (PP-g-PS) containing about 5 to about 70 % styrenic monomer;
(2) about 20 to about 80 weight % polyethylene, polypropylene or ethylene-propylene copolymer, preferably high molecular weight polypropylene, or modified polypropylene (such as ethylene-propylene impact modified polypropylene, comprising 14 % rubber and 8.5 % ethylene);
(3) less than about 30 weight % rubber modifier(s), such as high impact polystyrene (e.g. Dow 478 HIPS, Dow Chemical Co.), and/or hydrogenated styrene isoprene diblock copolymer (e.g., Kraton G1702 by Shell Chemical Co. with 37% styrene, 63% rubber), and/or styrene butadiene styrene tri-block copolymers, and/or hydrogenated styrene butadiene styrene copolymers (e.g., Kraton G 1651/1652 by Shell Chemical Co. with 29% styrene and 71% rubber), or blends thereof; and
(4) less than about 5 weight % of stabilizers, such as antioxidants (e.g., Irganox 1010, a phenolic stabilizer from Ciba Geigy, or P-EPQ, a phosphonite stabilizer from Sandoz and Ciba-Geigy) and metal deactivators (e.g., Organic complexes containing nitrogen or sulfur, amines, sulfides and phosphates; a specific example is ethylenediaminetetraacetic acid).

The foaming agent is a supercritical fluid, such as supercritical carbon dioxide, or supercritical nitrogen. Supercritical carbon dioxide is especially preferred. However, one skilled in the art could substitute any other suitable supercritical fluid for supercritical carbon dioxide. For example, nitrogen or other suitable gases can be used as the supercritical fluid.

The dielectric foam has a density not more than about 0.20 g/cm³, and preferably ranging from about 0.03 to about 0.20 g/cm³, even more preferably from about 0.03 to about 0.08 g/cm³, and a suitably small dissipation factor at 2 GHz.

The cell size of the foam is ordinarily not more than 100 µm, and preferably not more than 60 µm. Cell sizes have been measured as low as about 10 µm. In addition, the wall thickness can be less than 1 µm. Another property of the foam is that the cells are closed cells and die cell size of the foam is substantially uniform. Using closed cells prevents fluids from escaping or entering the cell. However, a small amount of fluid can still enter and leave the cell through diffusion through the cell's membrane, though this amount is negligible.

In another embodiment, the above mentioned objects of the present invention have been met by a transmission line comprising the foam dielectric. The type of transmission line employed is not critical to the present invention. Examples of such transmission lines which can be used in the present invention include coaxial cable, stripline, and other transmission lines.

In a preferred embodiment, the coaxial transmission line comprises an inner conductor surrounded by foam dielectric, wherein the foam dielectric comprises a polymer alloy foam obtained from using a supercritical fluid; and an outer conductor surrounding the foam dielectric. The foam dielectric contains polymer alloy and entrapped gas resulting from the supercritical fluid.

Coaxial cables having an impedance of 50 ohms have been produced using the present invention. However, other transmission lines can be produced using the present invention. These transmission lines can be used with cable television, with instrumentation, with radar and a host of other applications in which coaxial cables are used.

In still another preferred embodiment, the stripline transmission line comprises an inner conductor having the above discussed foam dielectric comprising a polymer alloy and entrapped gas resulting from the supercritical fluid disposed on opposite sides of the inner conductor, wherein the foam dielectric is disposed between upper and lower ground planes, and a jacket surrounds the ground planes.

In another embodiment, the above mentioned objects of the present invention have been met by a process for providing a transmission line comprising the steps of:
(1) providing a conductor
(2) disposing around said conductor a foam dielectric by
   (A) feeding a polymer alloy into an extruder and heating the polymer alloy,
   (B) feeding a supercritical fluid into the extruder,
   (C) mixing the polymer alloy and the supercritical fluid,
   (D) exiting the polymer alloy and the supercritical fluid from the extruder, and
   (E) passing the polymer alloy and the supercritical fluid through a crosshead.
(3) applying a ground plane to one or more sides of said foam dielectric such that said conductor does not contact said ground plane.

In a preferred embodiment of the above process, a polymer alloy, preferably Hivalloy^{™} is fed into the extruder, where the resin is melted. Processing variables may be varied to accommodate various polymer alloys, foaming agents, or processing conditions. The extruder used is preferably a single screw 63.5 mm (2-½") extruder with a length to diameter ratio of 36-to-1. The extruder may be water cooled with cast aluminum heaters and can be equipped with high- or low-output extruder screws. The extruder preferably has dual injection ports and gas injection nozzles. The load pressure preferably falls within the range of approximately 1.56 x 10⁷ N/m² - 3.45 x 10⁷ N/m² (2300-5000 psi) with a weight percentage of gas ranging from about 3% to about 8%. Material output is preferably about 2.5 - 40 kg (5-80 pounds) per hour.

In a preferred embodiment, the foaming agent, which may be supercritical carbon dioxide, is injected into the melt under pressure, dissolving into the resin, which solution then flows into a crosshead, which diverts the flow and distributes the molten material around a wire or tube. In this embodiment, when the solution of supercritical carbon dioxide in Hivalloy^{™} is exposed to lower pressure, the carbon dioxide comes out of solution. More particularly, the supercritical carbon dioxide loses its solubility and changes from the supercritical state to a gaseous state. This results in a light Hivalloy^{™} foam. Preferably, payout, take-up, and capstans manage wire and tube constituents of the coaxial cable, ensuring that the wire and tube are pulled through the crosshead at a constant velocity and tension. The foam may be cooled in a water trough. In the example of a coaxial cable, the result is a cylindrical foul dielectric core with the inner conductor centered within the foam. An outer conductor may be applied over the foam, completing the manufacture of the coaxial cable. White this is one preferred embodiment of the disclosed process, one of ordinary still in the art would understand that the variables may be modified and optimized to accommodate different materials and flow rates.

For instance, to achieve the desired flow rates, the solubility of the foaming agent in the polymer melt is estimated at the processing pressure and temperature used at such stage. Preferably, only a soluble amount of foaming agent need be injected into the polymer melt stream, since an excessive amount thereof would result in the formation of undesirable voids in the polymer melt. The existence of such voids prevents homogeneous nucleation at a later stage because the foaming agent molecules prefer to diffuse to larger cells, which results in the formation of hollow cavities in the final product. In general, the solubility of a foaming agent such as a supercritical fluid in a polymer changes with the temperature and pressure. For example, at 200°C and 27.6 MPa (4,000 psi), which represent a typical processing temperature and pressure, the solubility of carbon dioxide in most polymers is approximately 10% by weight, while that of nitrogen under the same conditions is about 2% by weight.

In an, a method of making a coaxial transmission line using the dielectric foam of the present invention is disclosed. The method comprises using a microcellular process. In addition, a polymer alloy and supercritical fluid mixture is foamed around an inner conductor. Further, a second conductor is applied around the foamed dielectric.

The above embodiments and other embodiments are further described by the drawings.

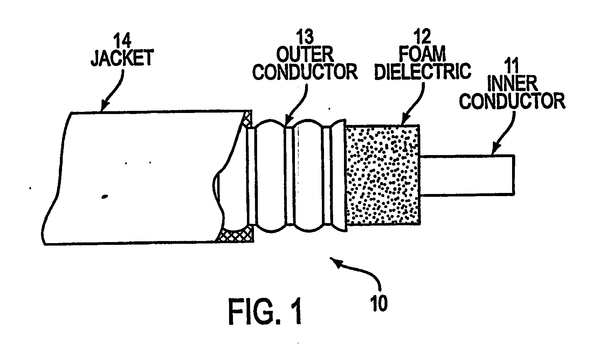

Figure 1 illustrates coaxial cable **10** incorporating the foam dielectric of the present invention. Figure 1 shows a conventional coaxial cable, cutaway to expose the various layers. The coaxial cable comprises en inner conductor **11** located at the center of the coaxial cable. In the illustrated embodiment, the conductor **11** is smooth; however, the conductor **11** can be corrugated. Surrounding the inner conductor wire **11** in a cylindrical manner is microcellular foam dielectric **12** which is produced by extruding a polymer alloy with a supercritical fluid such as carbon dioxide. It is known in the art that one or more adhesive layers may be placed around the inner conductor wire **11,** the foam dielectric **12,** or other constituents of the coaxial cable. The adhesive may be coextruded with the foam dielectric layer, or extruded separately onto the forma dielectric and/or the inner conductor.

An outer conductor **13** is positioned around the foam dielectric **12.** In the illustrated embodiment, the conductor **13** is corrugated, however, it is not necessary that the conductor **13** be corrugated. In an alternative embodiment, the outer conductor shell **13** is a non-corrugated conductor. A cable jacket **14** surrounds the outer conductor.

The polymer alloy used to make the foam dielectric **12** is preferably foamable to a sufficiently low density. In a preferred embodiment, the density is about 0.08 g/cm³ or less. Dielectrics with densities of about 0.03 to about 0.20 g/cm³ have been produced. In addition, the melt strength of the polymer alloy is able to withstand the extrusion process. Also, the polymer alloy is mechanically and thermally stable between the temperatures of about -40°C and about 100°C.

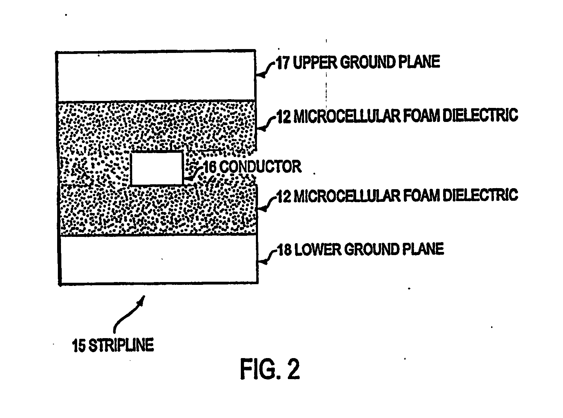

Figure 2 shows a stripline transmission line **15** fabricated using the foam dielectric **12** of the present invention. It consists of a conductor **16** and a microcellular foamed dielectric **12** of the present invention disposed an opposite sides of the conductor **16.** In addition, it also comprises an upper **17** and a lower ground plane **18.** The foamed dielectric **12** is disposed between the upper **17** and the lower ground plane **18.** The entire stripline arrangement is covered with a jacket **19.** Typically, stripline transmission lines or stripline cables have impedances of **50** ohms or 75 ohms. However, other impedances can be produced using the present invention. These stripline cables can be used with cable television, with radar, with instrumentation, and a host of other applications in which striplines are used.

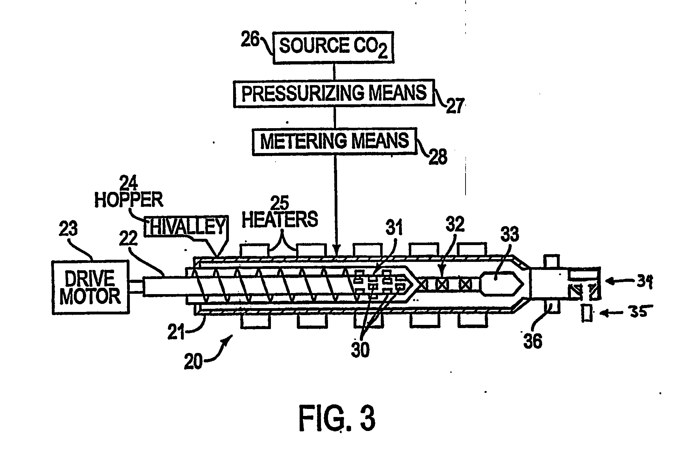

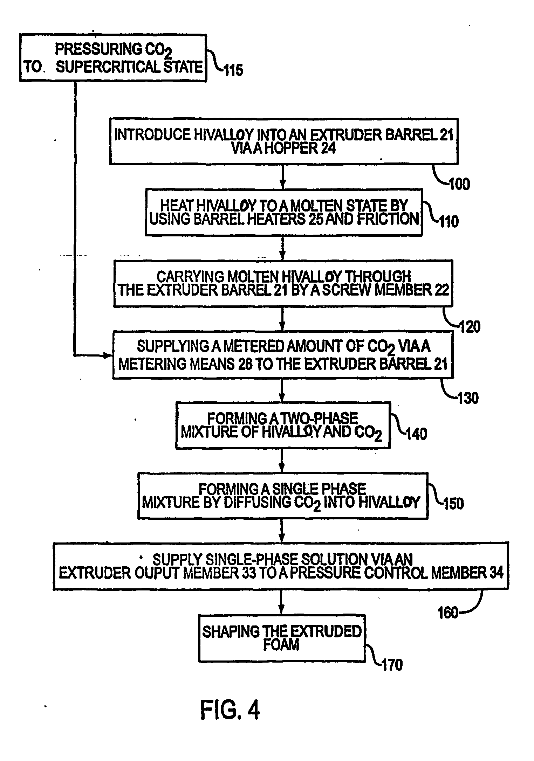

Figure 3 shows the supercritical fluid extrusion apparatus and Figure 4 shows the supercritical fluid extrusion process which have been incorporated into the present invention. The process for production of the dielectric foam of the present invention (or supercritical process) involves an extruder **20** and supercritical fluid injectors.

Further detail is provided in Figures 3 and 4. The extruder 20 includes an extruder barrel **21** having a rotating screw member **22** suitably mounted therein, the rotation thereof being produced by an appropriate drive motor **23.** A plurality of pellets of a material to be foamed, e.g., a polymer plastic material (such as Hivalloy^{™}), are introduced into the extruder barrel 21 via a hopper **24** (Step 100). Extruder barrel **21** has a plurality of barrel heaters **25** mounted thereon to heat the barrel. Hence, the polymer pellets are heated therein to a molten state (Step 110) both by friction due to the mechanical shear forces on the material produced by the rotating screw member **22** and by the heated barrel as the pellets are carried through the barrel by screw member **22.**

A supercritical fluid, such as carbon dioxide from a source **26** thereof is delivered at a selected pressure (Step 115), by a suitable means **27,** and a metered amount thereof is supplied at a controlled rate via a metering means **28** to the extruder barrel **21** (Step 130). This results in the formation of a two-phase mixture (140), existing at a high pressure within the extruder barrel **21.** The location of the supercritical fluid injection can be suitably selected to occur at a location along die barrel such that proper melting, shearing, and pressurization of the polymer melt are achieved before the gas is introduced.

In the particular embodiment described, the two-phase mixture of supercritical fluid and polymer material that results is then further homogenized by shear forces thereon using a plurality of irregular blades **30** machined into a Portion **31** of extruder screw **22** within extrusion barrel **21.** Alternatively, in some applications, the mixing process which occurs when using a standard extrusion screw can be sufficient to provide the desired mixture without the need for the irregular blades **30.** The dynamically mixed melt can then be supplied to a plurality of static mixers **32** where additional agitation can be incorporated as required. As a result the supercritical fluid diffuses and dissolves into die polymer material so as to form a single-phase solution thereof (Step 150). In most embodiments, passage of the mixture through a barrel which does not use the static mixers provides sufficient diffusion and dissolution to form the desired single-phase solution. The single-phase solution is supplied via the extruder output, in some embodiments including a breaker plate, to a cross head **34** (Step 160) at a selected temperature which is maintained by appropriate temperature control elements **36.** The pressure drops rapidly in the cross head **34** to produce microcellular nucleation. The tip-and-die combination in the cross head can be used to produce a foamed material of a desired shape, e.g., a sheet, a filament, or to wrap the foam around an inner conductor, etc. (Step 170). Subsequent to the shaping process, where limited expansion has previously occurred, the material will then become fully expanded. In some embodiments a shaping die **35** is then used to further smoothen the surface of the expanded foam.

In order to produce a consistent foamed product, the flow rates of the foaming agent, e.g. a supercritical fluid, and the polymer streams introduced in extrusion barrel **21** need to be controlled in order to achieve a constant weight ratio. The polymer flow rate is controlled primarily by the rotational speed of the extruder screw **22.** The metering of the flow of a foaming agent such as a supercritical fluid, for example, is achievable by using a suitable supercritical plant including a metering valve which in its turn may be feedback controlled.

Conventional cable processing equipment is used including payout, take-up, capstans, an extruder, and, in some embodiments, a water trough.

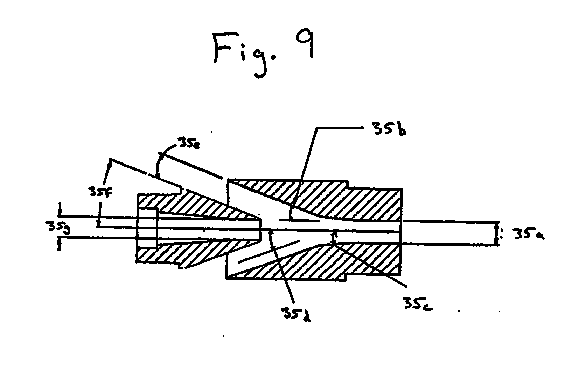

The internal components of the cross head **35** are more clearly depicted in Figure 9, showing a cross-section of the die and tip combination. The die diameter **35a** is the opening from which the foamed dielectric emerges. The die has a die primary angle **35b** and a die secondary angle **35c.** The convergence angle **35e** and incidence angle **35d** determine the flow profile as the homogeneous mixture is applied to the center conductor. The tip has an inside diameter 35g and a tip angle **35f.** One of ordinary skill will appreciate that these parameters may be adjusted depending on the specific size, shape, and density of the extruded foam.

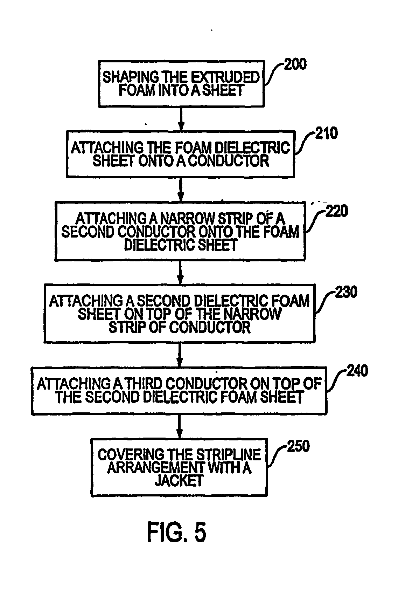

Figure 5 illustrates the steps taken to produce a stripline cable after the foam dielectric **12** is shaped into a sheet. More specifically, the shaping member **35,** preferably a crosshead (or die) with proper tooling, allows the extruded foam to form a sheet. (Step 200) The sheet **12** is placed upon or attached to a conductor **18** (which serves as a ground plane) also shaped as a sheet (Step 210). Next, a narrow strip of a second conductor **16** is placed on or attached to the top of the foam dielectric sheet **12** (Step 220). A second dielectric foam sheet **12** is then placed on or attached to the top of the narrow strip of conductor (Step 230). Then a third conductor **17** (which also serves as a ground plane and is also shaped as a sheet) is placed on or attached to the top of the second dielectric foam sheet **12** (Step 240). The stripline arrangement is then covered with a jacket **19** (Step 250).

The following example is presented for illustrative purposes only, and is in no way intended to limit the scope of the present invention.

### EXAMPLE

The following Example is one embodiment of the present invention where an embodiment of the foam dielectric, disclosed in the preceding detailed description, is used to manufacture an improved 22.23 mm (7/8") coaxial cable exhibiting improved properties with respect to signal attenuation and dielectric density.

In this Example, Hivalloy^{™} G 2120 was foamed using supercritical carbon dioxide.

The extruder used was a single screw 63.5 mm (2-½") extruder with a length to diameter ratio of 36-to-1. The extruder was water cooled with cast aluminum heaters and could be equipped with high- or low-output extruder screws. The extruder featured dual injection ports and gas injection nozzles. The load pressure applied was approximately 1.56 x 10⁷ N/m² - 3.45 x 10⁷ N/m² (2300-5000 psi) with a weight percentage of gas ranging from 3% to 8%.

The polymer alloy was fed into the extruder where it was heated. Supercritical carbon dioxide was metered and introduced into the extruder, where it was mixed with the polymer. The mixture was extruded through a crosshead onto the inner conductor. Material output was about 2.5 - 40 kg (5-80 pounds) per hour. The extruder tooling configuration used is shown in Figure 9.

The temperature profile of the extruder ranged from 182°C to 160°C with a die temperature of 156°C. The die had a 1.14 mm (0.440") inside diameter and a 2.34 mm (0.900") outside diameter, with dual angles of 10 and 20 degrees. The die tip had an inside diameter of 1.02 mm (0.391"). The screw operated at 40 rpm, and the linespead of the process was 1.16 x 10-1 m/s (23 ft/min).

Payout, take-up, and capstans manage wire and tube constituents of the coaxial cable, ensuring that the wire and tube were pulled through the crosshead at a constant velocity and tension. The result was a cylindrical foam dielectric core with the inner conductor centered within the form. An outer conductor was applied over the foam, completing the manufacture of die coaxial cable.

The mean cell size of the foam dielectric was about 50-60 µm, and the density was about 0.065 g/cm³

A sample of the coaxial cable was taken after cooling and tested for signal attenuation using a mobile cable test system manufactured by Hewlett-Packard, the HP3753. Over a range of signal frequencies, signal attenuation was determined as listed in the chart below.

The same attenuation test was performed on a section of cable containing foamed polyethylene according to the process disclosed in Fox. A supercritical blowing agent was not used in this Comparative Example, because the solubility of supercritical carbon dioxide in polyethylene resulted in a foam of 0.50 g/cm³, a density approximately three times greater than that of conventionally foamed polyethylene.

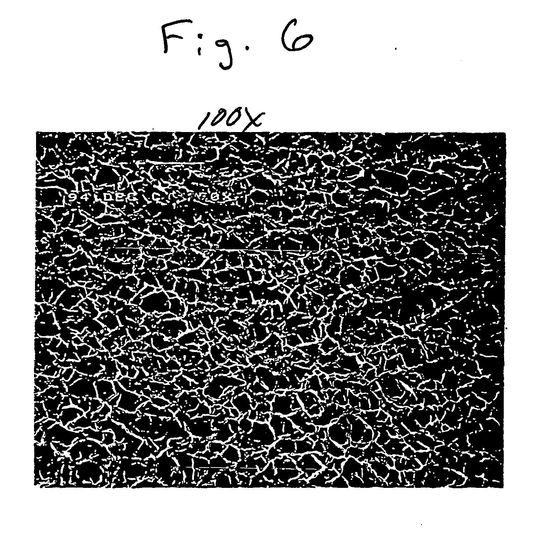

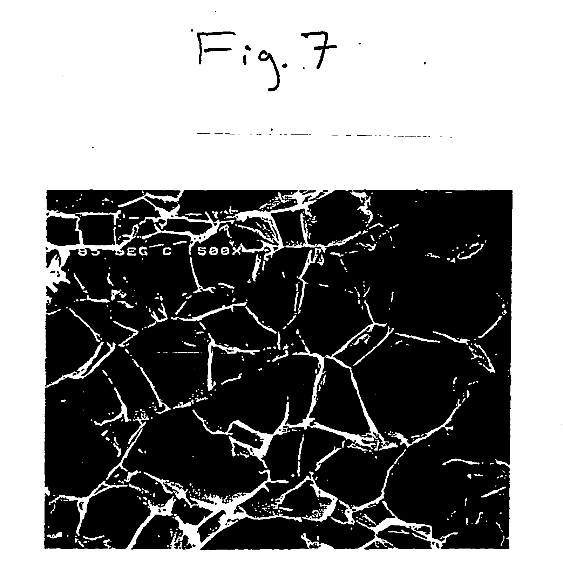

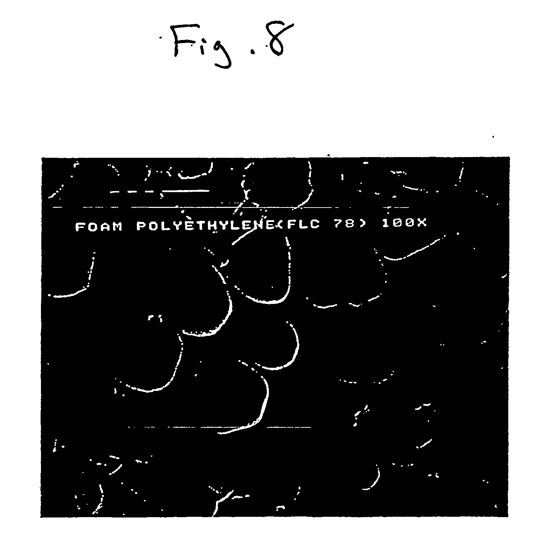

Figure 6, Figure 7, and Figure 8 are photomicrographs of samples of foamed polymer. Figure 6 and Figure 7 correspond to the Example of the foam dielectric of the present invention, and Figure 8 is a sample of foamed polyethylene of the Comparative Example, representing a foam dielectric of the prior art.

Figure 6 is a photomicrograph taken at a magnification of 100X showing the cell geometry of one embodiment of the present invention.

Figure 7 is a photomicrograph more clearly depleting an embodiment of the present invention, taken at a magnification of 500X.

Figure 8, for comparison, is a photomicrograph of the closest known suitable foam dielectric, foamed polyethylene, representative of the foam disclosed in the Fox patent. As will be apparent to one skilled in the art, the apparent cell size of the foamed polyethylene at a magnification of 100X is approximately the same as the apparent cell size of the microcellular foam at a magnification of 500X. Because of the five-fold difference in magnification between the photomicrographs of Figure 7 and Figure 8, this represents at least a five-fold decrease in the cell size of the present invention, as compared to the closest prior art.

As will be apparent from a comparison of the photomicrographs, the foam of the Comparative Example has a much larger cell size, with thicker cell walls, as compared to the foam of the present invention. Accordingly, the foam of the Comparative Example has a greater density than the foam of the present invention. The higher density of the foam of the Comparative Example corresponds to a greater dissipation factor, and ultimately, greater signal attenuation when incorporated into a transmission line. The results of the attenuation testing of the conventionally foamed polyethylene appear in Table 1 below. Both sets of data refer to 22.23 mm (7/8") cable.

**Table 1**

| **Frequency (MHz)** | **Attenuation** **(dB/30.5 m)** **((dB/100 ft))** **THIS INVENTION** | **Attenuation** **(dB/30.5 m)** **((dB/100 ft))** **COMPARATIVE EXAMPLE** |
|---|---|---|
| 500 | 0,77 | 0.85 |
| 1000 | 1.11 | 1.25 |
| 1500 | 1.39 | 1.57 |
| 2000 | 1.63 | 1.86 |
| 2500 | 1.85 | 2.12 |
| 3000 | 2.05 | 2.36 |

As shown by the data in Table 1, the present invention yields excellent signal attenuation properties. By comparison, coaxial cable produced using foamed polyethylene of the Comparative Example yielded greater signal attenuation at all frequencies.

## Claims

1. A transmission line comprising: at least one conductor and at least one dielectric, said dielectric comprising a foamed polymer alloy obtained using a supercritical fluid as a foaming agent, wherein said polymer alloy comprises at least two different polymers or a graft polymer of said polymers; and wherein said polymer alloy has a glass transition temperature greater than 100°C and a melt index of between 0.6 and 9.

2. The transmission line according to claim 1, wherein the foam dielectric has a cell size of not more than 100 µm, especially of not more than 60 µm.

3. The transmission line according to claims 1 or 2, wherein said polymer alloy comprises polypropylene and polystyrene.

4. The transmission line according to any one of the preceding claims, wherein said polymer alloy comprises:
(1) about 20 to about 80 weight % polypropylene-grafted-polystyrene containing about 5 to about 70% styrenic monomer;
(2) about 20 to about 80 weight % of an olefinic polymer selected from the group consisting of polyethylene, polypropylene or ethylene-propylene copolymer;
(3) less than about 30 weight % of a rubber modifier; and
(4) less than about 5 weight % of a stabilizer.

5. The transmission line according to claim 4, wherein said olefinic polymer is a member selected from the group consisting of high molecular weight polypropylene, modified polypropylene, and ethylene-propylene impact modified polypropylene comprising about 14% rubber and about 8.5% ethylene.

6. The transmission line according to claims 4 or 5, wherein said rubber modifier is a member selected from the group consisting of high impact polystyrene, hydrogenated styrene isoprene diblock copolymer, styrene butadiene styrene triblock copolymers, and hydrogenated styrene butadiene styrene copolymers.

7. The transmission line according to claim 6, wherein said hydrogenated styrene isoprene diblock copolymer comprises 37% styrene and 63% isoprene, and said hydrogenated styrene butadiene copolymer comprises 29% styrene and 71% butadiene.

8. The transmission line according to any one of claims 4 to 7, wherein said stabilizer is a member selected from the group consisting of antioxidant and a metal deactivator.

9. The transmission line according to claim 8, wherein said antioxidant is a member selected from the group consisting of phosphonite stabilizers and phenolic stabilizers.

10. The transmission line according to claim 8 or 9, wherein said metal deactivator is ethylenediaminetetraaceticacid.

11. The transmission line according to any one of the preceding claims, wherein said supercritical fluid is supercritical carbon dioxide.

12. The transmission line according to any one of the preceding claims, wherein the foam dielectric has a density of not more than about 0.2 g/cm3, especially a density of about 0.03 g/cm3.

13. The transmission line according to any one of claims 1 to 11, wherein the foam dielectric has a density of about 0.03 g/cm3 to about 0.08 g/cm3.

14. The transmission line according to any one of the preceding claims, wherein said transmission line is a coaxial transmission line.

15. The transmission line according to any one of claims 1 to 13, wherein said transmission line is a stripline transmission line.

16. The transmission line according to any one of claims 1 to 13, wherein said transmission line is a microstripline transmission line.

17. A process for making a transmission line according to any one of claims 1 to 13, comprising the steps of:
(1) providing a conductor
(2) disposing around said conductor a foam dielectric formed by
(A) feeding a polymer alloy into an extruder and heating the polymer alloy,
(B) feeding a supercritical fluid into the extruder,
(C) mixing the polymer alloy and the supercritical fluid,
(D) exiting the polymer alloy and the supercritical fluid from the extruder, and
(E) passing the polymer alloy and the supercritical fluid through a crosshead;
and
(3) applying a ground plane to one or more sides of said foam dielectric such that said conductor does not contact said ground plane.

18. A process for making a coaxial transmission line according to claim 14, comprising the steps of:
(1) providing an inner conductor
(2) disposing around said inner conductor a foam dielectric formed by
(A) feeding a polymer alloy into an extruder and heating the polymer alloy,
(B) feeding a supercritical fluid into the extruder,
(C) mixing the polymer alloy and the supercritical fluid,
(D) exiting the polymer alloy and the supercritical fluid from the extruder, and
(E) passing the polymer alloy and the supercritical fluid through a crosshead;
and
(3) applying an outer conductor around said foam dielectric.

## Patentansprüche

1. Übertragungsleitung, umfassend: Mindestens einen Leiter und mindestens ein Dielektrikum, wobei das besagte Dielektrikum eine unter Verwendung eines überkritischen Fluids als Schäummittel gewonnene geschäumte Polymerlegierung enthält, wobei die besagte Polymerlegierung mindestens zwei verschiedene Polymere oder ein Pfropfpolymer der besagten Polymere enthält: und wobei die besagte Polymerlegierung eine Glasübergangstemperatur von über 100° C und einen Schmelzindex im Bereich von 0,6 bis 9 aufweist.

2. Übertragungsleitung nach Anspruch 1, wobei das Schaumstoffdielektrikum eine Zellgröße von nicht über 100 µm, insbesondere von nicht über 60 µm, aufweist.

3. Übertragungsleitung nach Anspruch 1 oder Anspruch 2, wobei die besagte Polymerlegierung Polypropylen und Polystyrol enthält.

4. Übertragungsleitung nach einem beliebigen der vorstehenden Ansprüche, wobei die besagte Polymerlegierung enthält:
(1) etwa 20 bis etwa 80 Gewichtsprozent mit Polypropylen gepfropftes Polystyrol mit etwa 5 bis etwa 70% Styrolmonomer;
(2) etwa 20 bis etwa 80 Gewichtsprozent eines Olefinpolymers, ausgewählt aus der Gruppe bestehend aus Polyethylen, Polypropylen oder Ethylen-Propylen-Copolymer:
(3) weniger als etwa 30 Gewichtsprozent eines Kautschukmodifizierers; und
(4) weniger als etwa 5 Gewichtsprozent eines Stabilisators.

5. Übertragungsleitung nach Anspruch 4, wobei das besagte Olefinpolymer ein Glied ausgewählt aus der Gruppe bestehend aus Polypropylen mit hohem Molekulargewicht, modifiziertem Polypropylen und durch Ethylen-Propylen modifiziertem schlagfestem Polypropylen mit etwa 14% Kautschuk und etwa 8,5% Ethylen ist.

6. Übertragungsleitung nach Anspruch 4 oder Anspruch 5, wobei der besagte Kautschukmodifizierer ein Glied ausgewählt aus der Gruppe bestehend aus hoch schlagfestem Polystyrol, hydriertem Styrol-lsopren-Diblockcopolymer, Styrol-Butadien-Styrol-Triblockcopolymeren und hydrierten Styrol-Butadien-Styrol-Copolymeren ist.

7. Übertragungsleitung nach Anspruch 6, wobei das besagte hydrierte Styrol-Isopren-Diblockcopolymer 37% Styrol und 63% Isopren enthält, und das besagte hydrierte Styrol-Butadien-Copolymer29% Styrol und 71% Butadien enthält.

8. Übertragungsleitung nach einem beliebigen der Ansprüche 4 bis 7, wobei der besagte Stabilisator ein Glied ausgewählt aus der Gruppe bestehend aus einem Antioxidans und einem Metalldeaktivator ist.

9. Übertragungsleitung nach Anspruch 8, wobei das besagte Antioxidans ein Glied ausgewählt aus der Gruppe bestehend aus Phosphonit-Stabilisatoren und phenolischen Stabilisatoren ist.

10. Übertragungsleitung nach Anspruch 8 oder Anspruch 9, wobei der besagte Metalldeaktivator Ethylendiamintetraessigsäure ist.

11. Übertragungsleitung nach einem beliebigen der vorstehenden Ansprüche, wobei das besagte überkritische Fluid überkritische Kohlendioxid ist.

12. Übertragungsleitung nach einem beliebigen der vorstehenden Ansprüche, wobei das Schaumstoffdielektrikum eine Dichte von nicht über etwa 0,2 g/cm³, insbesondere von etwa 0,03 g/cm³, aufweist.

13. Übertragungsleitung nach einem beliebigen der Ansprüche 1 bis 11, wobei das Schaumstoffdielektrikum eine Dichte im Bereich von etwa 0,03 g/cm³ bis etwa 0,08 g/cm³ aufweist.

14. Übertragungsleitung nach einem beliebigen der vorstehenden Ansprüche, wobei die besagte Übertragungsleitung eine koaxiale Übertragungsleitung ist.

15. Übertragungsleitung nach einem beliebigen der Ansprüche 1 bis 13, wobei die besagte Übertragungsleitung eine Streifenleiterübertragungsleitung ist.

16. Übertragungsleitung nach einem beliebigen der Ansprüche 1 bis 13, wobei die besagte Übertragungsleitung eine Mikrostreifenleiterübertragungsleitung ist.

17. Verfahren zum Herstellen einer Übertragungsleitung gemäß einem beliebigen der Ansprüche 1 bis 13, die folgenden Schritte umfassend:
(1) Bereitstellen eines Leiters
(2) Anordnen eines Schaumstoffdielektrikums rund um den besagten Leiter durch
(A) Zuführen einer Polymerlegierung in eine Strangpresse und Erhitzen der Polymerlegierung,
(B) Zuführen eines überkritischen Fluids in die Strangspresse,
(C) Vermischen der Polymerlegierung und des überkritischen Fluids,
(D) Anregen der Polymerlegierung und des überkritischen Fluids aus der Strangpresse, und
(E) Führen der Polymerlegierung und des überkritischen Fluids durch einen Gegenholm;
und
(3) Anbringen einer Grundschicht auf einer oder mehreren Seiten des besagten Schaumstoffdielektrikums, derart, dass das besagte Schaumstoffdielektrikum die Grundschicht nicht berührt.

18. Verfahren zum Herstellen einer koaxialen Übertragungsleitung gemäß Anspruch 14, die folgenden Schritte umfassend:
(1) Bereitstellen eines Innenleiters
(2) Anordnen eines Schaumstoffdielektrikums rund um den besagten Innenleiter durch
(A) Zuführen einer Polymerlegierung in eine Strangpresse und Erhitzen der Polymerlegierung,
(B) Zuführen eines überkritischen Fluids in die Strangspresse,
(C) Vermischen der Polymerlegierung und des überkritischen Fluids,
(D) Anregen der Polymerlegierung und des überkritischen Fluids aus der Strangpresse, und
(E) Führen der Polymerlegierung und des überkritischen Fluids durch einen Gegenholm;
und
(3) Anbringen eines Außenleiter rund um das besagte Schaumstoffdielektrikum.

## Revendications

1. Ligne de transmission comprenant : au moins un conducteur et au moins un diélectrique, ledit diélectrique comprenant une mousse d'alliage de polymères obtenue en utilisant un fluide supercritique comme agent moussant, dans laquelle ledit alliage de polymères comprend au moins deux polymères différents ou un polymère greffé desdits polymères ; et dans laquelle ledit alliage de polymères présente une température de transition vitreuse supérieure à 100 °C et un indice de fluidité compris entre 0,6 et 9.

2. Ligne de transmission selon la revendication 1, dans laquelle la mousse diélectrique présente une dimension cellulaire de 100 µm maximum, particulièrement de 60 µm maximum.

3. Ligne de transmission selon les revendications 1 ou 2, dans laquelle ledit alliage de polymères comprend du polypropylène et du polystyrène.

4. Ligne de transmission selon l'une quelconque des revendications précédentes, dans laquelle ledit alliage de polymères comprend :
(1) environ 20 à environ 80 % en poids de polystyrène avec polypropylène greffé contenant environ 5 à environ 70% de monomère styrénique ;
(2) environ 20 à environ 80 % en poids d'un polymère oléfinique choisi parmi le groupe constitué par le polyéthylène, le polypropylène ou un copolymère d'éthylène et de propylène ;
(3) moins d'environ 30 % en poids d'un modificateur de caoutchouc ; et
(4) moins d'environ 5 % en poids d'un agent stabilisant.

5. Ligne de transmission selon la revendication 4, dans laquelle ledit polymère oléfinique est un élément sélectionné parmi le groupe constitué par le polypropylène à masse moléculaire élevée, le polypropylène modifié et le polypropylène modifié à l'éthylène et au propylène comprenant environ 14 % de caoutchouc et environ 8,5% d'éthylène.

6. Ligne de transmission selon les revendications 4 ou 5, dans laquelle ledit modificateur de caoutchouc est un élément sélectionné parmi le groupe constitué par le polystyrène choc, le copolymère double styrène-isoprène hydrogéné, les copolymères triples styrène-butadiène-styrène et les copolymères styrène-butadiène-styrène hydrogénés.

7. Ligne de transmission selon la revendication 6, dans laquelle ledit copolymère double styrène-isoprène hydrogéné comprend 37 % de styrène et 63 % d'isoprène, et ledit copolymère styrène-butadiène-styrène hydrogéné comprend 29 % de styrène et 71% de butadiène.

8. Ligne de transmission selon l'une quelconque des revendications 4 à 7, dans laquelle ledit agent stabilisant est un élément sélectionné parmi le groupe constitué par un antioxydant et un désactiveur de métaux.

9. Ligne de transmission selon la revendication 8, dans laquelle ledit antioxydant est un élément sélectionné parmi le groupe constitué par les stabilisants phosphoniques et les stabilisants phénoliques.

10. Ligne de transmission selon la revendication 8 ou 9, dans laquelle ledit désactiveur de métaux est un acide éthylène diamine tétra acétique.

11. Ligne de transmission selon l'une quelconque des revendications précédentes, dans laquelle ledit fluide supercritique est un dioxyde de carbone supercritique.

12. Ligne de transmission selon l'une quelconque des revendications précédentes, dans laquelle la mousse diélectrique présente une densité d'environ 0,2 g/cm³ maximum, en particulier une densité d'environ 0,03 g/cm³ maximum.

13. Ligne de transmission selon l'une quelconque des revendications 1 à 11, dans laquelle la mousse diélectrique présente une densité comprise entre environ 0,03 g/cm³ et environ 0,08 g/cm³.

14. Ligne de transmission selon l'une quelconque des revendications précédentes, dans laquelle ladite ligne de transmission est une ligne de transmission coaxiale.

15. Ligne de transmission selon l'une quelconque des revendications 1 à 13, dans laquelle ladite ligne de transmission est une ligne de transmission à ruban.

16. Ligne de transmission selon l'une quelconque des revendications 1 à 13, dans laquelle ladite ligne de transmission est une ligne de transmission à microruban.

17. Processus de réalisation d'une ligne de transmission selon l'une quelconque des revendications 1 à 13, comprenant les étapes suivantes :
(1) fournir un conducteur
(2) disposer autour dudit conducteur une mousse diélectrique formée par
(A) alimentation d'un alliage de polymères dans une extrudeuse et chauffage de l'alliage de polymères,
(B) alimentation d'un fluide supercritique dans l'extrudeuse,
(C) mélange de l'alliage de polymères et du fluide supercritique,
(D) sortie de l'alliage de polymères et du fluide supercritique de l'extrudeuse, et
(E) passage de l'alliage de polymères et du fluide supercritique dans une tête d'équerre ;
et
(3) application d'un plan de masse sur un ou plusieurs côtés de ladite mousse diélectrique de sorte que ledit conducteur ne vienne pas au contact dudit plan de masse.

18. Processus pour réaliser une ligne de transmission coaxiale selon la revendication 14, comprenant les étapes suivantes :
(1) fournir un conducteur interne
(2) disposer autour dudit conducteur interne une mousse diélectrique formée par
(A) alimentation d'un alliage de polymères dans une extrudeuse et chauffage de l'alliage de polymères,
(B) alimentation d'un fluide supercritique dans l'extrudeuse,
(C) mélange de l'alliage de polymères et du fluide supercritique,
(D) sortie de l'alliage de polymères et du fluide supercritique de l'extrudeuse, et
(E) passage de l'alliage de polymères et du fluide supercritique dans une tête d'équerre ;
et
(3) application d'un conducteur externe autour de ladite mousse diélectrique.
